# EUROPÄISCHE PATENTSCHRIFT

(11) **EP 0 908 351 B1**
(45) Veröffentlichungstag und Bekanntmachung des Hinweises auf die Patenterteilung: **31.10.2001**
(21) Anmeldenummer: 98112697.2
(22) Anmeldetag: 09.07.1998
(51) Int. Cl.: B60N 3/02

(54) **Haltevorrichtung für Grossraumfahrzeuge, wie Omnibusse**
Holding device for large volume vehicles, such as buses
Dispositif de maintien pour véhicules à grand volume, comme des autobus

(30) Priorität: 11.10.1997 DE 19745117
(43) Veröffentlichungstag der Anmeldung: 14.04.1999
(73) Patentinhaber: HAPPICH Fahrzeug- und Industrieteile GmbH, 42285 Wuppertal (DE)
(72) Erfinder: Nuyan, Vedat, 42281 Wuppertal (DE); Hanold, Richard, 42289 Wuppertal (DE)

(56) Entgegenhaltungen:
- DE-A- 2 711 993
- DE-A- 3 413 183
- FR-A- 2 401 796
- GB-A- 2 305 646
- US-A- 2 130 283
- US-A- 5 584 096

## Beschreibung

Die Erfindung bezieht sich auf eine Haltevorrichtung für Großraumfahrzeuge, wie Omnibusse, mit einer eine Haltestange konzentrisch umgreifenden Buchse und einem daran angeordneten Griffkörper.

Eine Haltevorrichtung der gattungsgemäßen Art ist durch die DE 34 13 183 A1 bekannt geworden. Die bekannte Haltevorrichtung besteht aus einem schlaufenartig gestalteten Griffkörper und einer damit verbundenen in sich geschlossenen Buchse, die eine Haltestange konzentrisch umgreift. Die Montage der bekannten Haltevorrichtung kann nur dann erfolgen, wenn die Haltestange noch nicht mit weiteren Stangen zu einem Haltestangensystem in einem Großraumfahrzeug zusammengefügt wurde. Wesentlicher ist aber, daß die bekannte Haltevorrichtung nicht ohne weiteres demontierbar ist, sondern für eine Demontage einen Auseinanderbau des gesamten Haltestangensystems erfordert. In den letzten Jahren hat sich bedauerlicherweise ein Vandalismus breit gemacht, der auch nicht vor einer Beschädigung von Haltevorrichtungen der in Rede stehenden Art zurückschreckt. Es kommt daher sehr häufig vor, daß in Großraumfahrzeugen des öffentlichen Verkehrs, wie Omnibussen, Schienenfahrzeugen aber auch Seilbahnkabinen derartige durch Beschädigung unbrauchbar gewordene Haltevorrichtungen ersetzt werden müssen. Ein solcher Austausch beschädigter Haltevorrichtungen ist äußerst aufwendig, wenn Haltevorrichtungen nach der DE 34 13 183 A1 Verwendung finden sollen.

Es ist hiernach Aufgabe der vorliegenden Erfindung eine Haltevorrichtung der eingangs näher erwähnten Art zur Verfügung zu stellen, die einen relativ einfachen und kostengünstigen Aufbau aufweisen soll und schnell und einfach montierbar und insbesondere auch demontierbar ist.

Die zur Lösung dieser Aufgabe vorgesehenen Maßnahmen sind im Anspruch 1 angegeben.

Die erfindungsgemäße Haltevorrichtung kann in einfachster Weise durch Aufweiten der Buchse radial auf eine Haltestange aufgesteckt werden, wobei die dann weit geöffnete Trennfuge gewissermaßen ein Klammermaul bildet. Das für die Haltevorrichtung zum Einsatz gelangende Material besitzt eine gewisse Elastizität mit Rückformvermögen, so daß die Buchse bestrebt ist, ihre geschlossene Buchsenform wieder anzunehmen, sobald die Haltestange die Trennfuge passiert hat. Ebenso einfach wie die Montage kann auch die Demontage durch Aufweiten der Buchse und Abziehen der Haltevorrichtung von der Haltestange erfolgen. Die an der Buchse angeordneten Materiallappen verleihen der Haltevorrichtung ein gutes Aussehen und ermöglichen in einfacher Weise eine Anordnung des Griffkörpers, der ein Zusammenziehen der Buchse und damit ein Klemmen der Buchse an der Haltestange bewirkt, sobald sich eine Person am Griffkörper festhält und diesen damit automatisch mit einer Zugkraft belastet.

Die Maßnahme nach Anspruch 2 bewirkt, daß die Haltevorrichtung weitgehend gegen ein ungewolltes Verrutschen auf der Tragestange in axialer Richtung zusätzlich zur Klemmwirkung gesichert ist.

Eine besonders einfache und kostengünstige Herstellung der Haltevorrichtung wird durch die Maßnahmen nach Anspruch 3 erzielt.

Durch die Weiterbildung der Erfindung nach Anspruch 4 erhält die Buchse eine erhöhte Verwindungssteifigkeit und eine verbesserte Anpaßbarkeit an unterschiedliche Haltestangendurchmesser, die zwischen 28 und 35 mm variieren können. Insbesondere wird auch sichergestellt, daß sich die Trennfuge nicht ungewollt über ein bestimmtes Maß hinaus öffnen kann.

Die Maßnahme nach Anspruch 5 verleiht der Haltevorrichtung eine erhöhte Stabilität und ein besonders gutes Aussehen. Die Materiallappen und Materialanformungen bilden miteinander ein Gehäuse, in dem sich die Befestigungsmittel für den Griffkörper und das buchsenseitige Ende des Griffkörpers weitgehend verdeckt anordnen lassen.

Die Anordnung von Montagelöchern in den Materiallappen läßt sich schon bei der Herstellung des Buchsenkörpers bewerkstelligen, so daß die Befestigung des Griffkörpers durch einfaches Einstecken von Bolzen erfolgen kann, wobei für die Bolzen lediglich eine kraftschlüssige Halterung erforderlich ist.

Der Griffkörper kann gemäß Anspruch 6 aus einer einfachen Handschlaufe bestehen, die aus einem textilen Band- oder Gurtmaterial hergestellt sein kann. Eine um zwei einander beabstandete Bolzen gelegte Handschlaufe stellt bei einer auf sie ausgeübten Zugkraft sicher, daß die Bolzen zufolge der Kraftresultierenden gegeneinandergezogen werden mit einer daraus resultierenden Klemmkraft der Buchse an der Haltestange.

Der Griffkörper kann gewünschtenfalls auch aus einem formstabilen Material gebildet sein, wobei es sich aber empfiehlt, im Verbindungsbereich zum Buchsenkörper eine Schlaufe aus Band- oder Gurtmaterial vorzusehen.

Ein Ausführungsbeispiel der Erfindung wird im folgenden anhand der Zeichnungen näher erläutert, und es zeigen:
- Fig. 1: die Haltevorrichtung in einer Stirnansicht,
- Fig. 2: eine Draufsicht nach Fig. 1,
- Fig. 3: eine Seitenansicht nach Fig. 1.
- Fig. 4: die Buchse der Haltevorrichtung in leicht gespreizter Offenstellung und
- Fig. 5: die Buchse nach Fig. 4 in einer Schnittdarstellung.

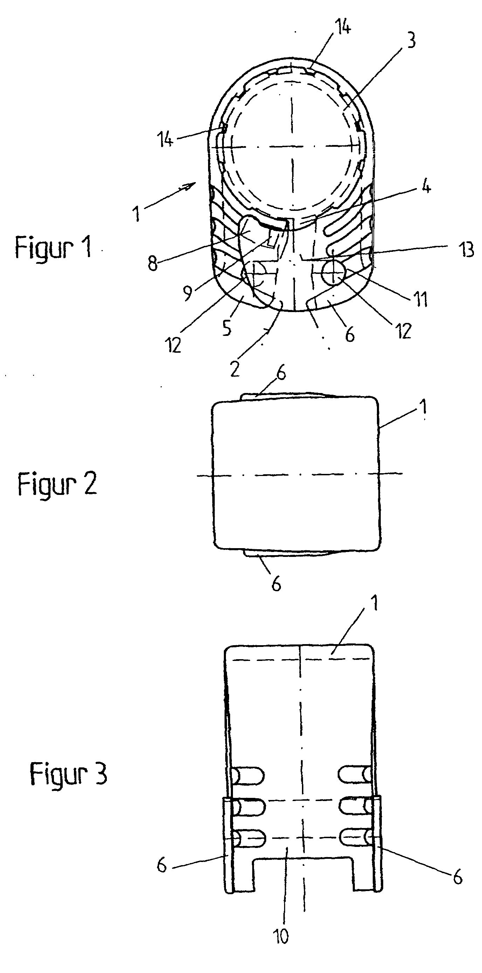

Die neue Haltevorrichtung besteht aus einer Buchse 1 und einem damit verbundenen Griffkörper 2, der in Fig. 1 als lediglich strichpunktierte Handschlaufe angedeutet ist. In ihrer, insbesondere aus Fig. 1 ersichtlichen Gebrauchsstellung ist die Buchse 1 geschlossen und umgreift konzentrisch eine Haltestange 3, wie sie üblicherweise in Großraumfahrzeugen, dem Fahrzeugdach benachbart, vorzufinden ist. Die Haltestange ist dabei mit mehreren Haltevorrichtungen der hier in Rede stehenden Art bestückt.

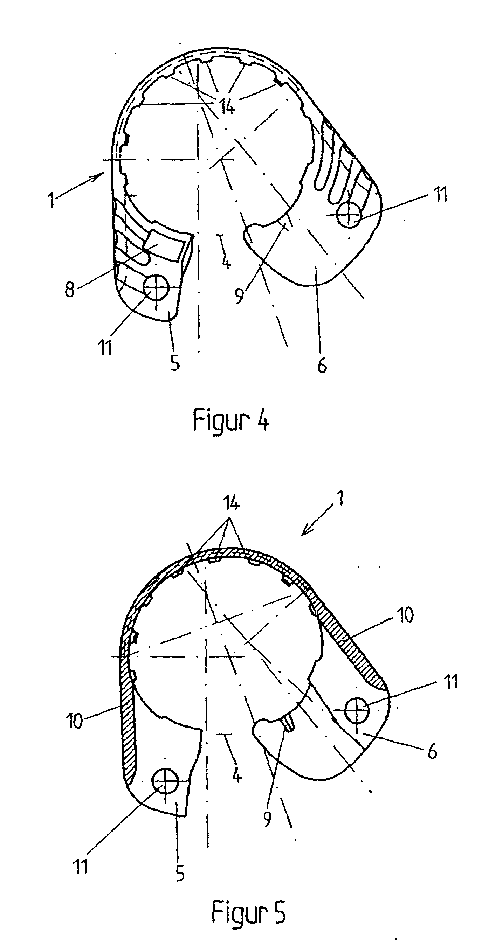

Die Buchse 1 ist durch eine axial durchlaufende Trennfuge 4 unterbrochen und elastisch aufweitbar ausgebildet. Die Buchse 1 besteht aus einem Kunststoff-Spritzgußteil und Fig. 4 und 5 zeigen die mögliche Herstellungslage im Werkzeug einer Spitzgußform.

An den axialen Enden der Buchse 1 sind jeweils zwei, der Trennfuge 4 jeweils links und rechts benachbarte Materiallappen 5 und 6 angeordnet bzw. angeformt. Die Materiallappen 5 und 6 verlaufen senkrecht zur Buchsenachse. Im aufgespreizten Zustand der Buchse 1 sind die Materiallappen 5 und 6 einander beabstandet, während sie sich in der Gebrauchslage der Buchse 1 überlappen, wie es in Fig. 1 deutlich dargestellt ist.

Die kürzeren Materiallappen 5 weisen jeweils eine Führungsnut 8 und die längeren Materiallappen 6 jeweils einen darin aufgenommenen Führungsnocken 9 auf. Die Materiallappen 5 sind ebenso wie die Materiallappen 6 durch an der Buchse 1 tangential angeordnete Materialanformungen 10 miteinander zu einer U-Form verbunden.

Die beiden Materiallappen 5 weisen ebenso wie die beiden Materiallappen 6 jeweils miteinander fluchtende Montagelöcher 11 auf, die zum Durchführen und Verankern von Befestigungsbolzen 12 vorgesehen sind. Diese parallel zur Buchsenachse ausgerichteten Befestigungsbolzen 12 werden von einer Schlaufe 13 des Griffkörpers 2 umspannt mit der Folge, daß bei einer Zugbelastung des Griffkörpers 2 die Befestigungsbolzen 12 aufeinanderzubewegt werden und die Buchse 1 die Haltestange 3 klemmt. Um die einem Verrutschen der Buchse 1 auf der Haltestange 3 entgegenwirkende Klemmwirkung zu erhöhen, sind im Innern der Buchse 1 sich an der Haltestange 3 abstützende Rippen 14 angeformt, die vorzugsweise aus einem gegenüber dem sonstigen Buchsenkörper weicherem Material mit rutschfesten Eigenschaften bestehen.

## Patentansprüche

1. Haltevorrichtung für Großraumfahrzeuge, wie Omnibusse, mit einer eine Haltestange (3) konzentrisch umgreifenden Buchse (1) und einem daran angeordneten Griffkörper (2), **dadurch gekennzeichnet, daß** die Buchse (1) durch eine axial durchlaufende Trennfuge (4) elastisch aufweitbar ausgebildet ist, daß an den Enden der Buchse (1) jeweils zwei, der Trennfuge (4) jeweils links und rechts benachbarte Materiallappen (5, 6) radial überstehend angeordnet sind, daß die Materiallappen (5, 6) bei aufgeweiteter Buchse (1) einander beabstandet sind und sich bei weitgehend geschlossener Trennfuge (4) einander überlappen und daß an den Materiallappen (4, 5) der Griffkörper (2) so angeordnet ist, daß sich bei einer auf ihn einwirkenden Zugkraft eine Verengung der Trennfuge (4) und damit eine Klemmung der Buchse (1) an der Haltestange (3) einstellt.

2. Haltevorrichtung nach Anspruch 1, **dadurch gekennzeichnet, daß** im Innern der Buchse (1) sich an der Haltestange (3) abstützende Rippen (14), Noppen oder dgl. angeordnet sind, die aus einem gegenüber dem sonstigen Buchsenkörper weicherem Material mit rutschhemmenden Eigenschaften bestehen.

3. Haltevorrichtung nach Anspruch 1, **dadurch gekennzeichnet, daß** die Buchse (1) als einstückiges Kunststoff-Spritzgußteil ausgebildet ist.

4. Haltevorrichtung nach wenigstens einem der vorangegangenen Ansprüche, **dadurch gekennzeichnet, daß** zwischen jedem Paar der an den Buchsenenden angeformten Materiallappen (5 bzw. 6) eine Führungseinrichtung vorgesehen ist mit einer beidendig geschlossenen Führungsnut (8) an dem einen Materiallappen (5) und einem darin eingreifenden Nocken (9) an dem anderen Materiallappen (6).

5. Haltevorrichtung nach wenigstens einem der vorangegangenen Ansprüche, **dadurch gekennzeichnet, daß** die Buchse (1) tangentiale, die Materiallappen (5, 6) links der Trennfuge (4) und die Materiallappen (5, 6) rechts der Trennfuge (4) jeweils zu einer U-Form miteinander verbindende Materialanformungen (10) aufweist.

6. Haltevorrichtung nach wenigstens einem der vorangegangenen Ansprüche, **dadurch gekennzeichnet, daß** die Materiallappen (5, 6) miteinander fluchtende Montagelöcher (11) zur Aufnahme von sich parallel zur Buchsenachse erstreckende Befestigungsbolzen (12) für den Griffkörper (2) aufweisen.

7. Haltevorrichtung nach wenigstens einem der vorangegangenen Ansprüche, **dadurch gekennzeichnet, daß** der Griffkörper (2) aus einer Handschlaufe besteht.

## Claims

1. Holding device for large-capacity vehicles, such as buses, having a bushing (1) concentrically gripping around a holding rod (3) and a gripping element (2) arranged thereon, **characterized in that** the bushing (1) is designed such that it can be expended elastically by means of a separating gap (4) running through it axially, **in that** two respective material tabs (5, 6) adjacent to the separating gap (4) on the left and right in each case are arranged in a radially protruding manner and the ends of the bushing (1), **in that** the material tabs (5, 6), when the bushing (1) is expended, are spaced apart from each other and, when the separating gap (4) is to a large extent closed, overlap each other, and **in that** the gripping element (2) is arranged on the material tabs (4, 5) in such a manner that when a tensile force acts upon it, the separating gap (4) is constricted and the bushing (1) therefore clamped to the holding rod (3).

2. Holding device according to Claim 1, **characterized in that** there are arranged in the interior of the bushing (1) ribs (14), nubs or the like which are supported on the holding rod (3) and consist of a material which is softer than the rest of the bushing body and has slip-blocking properties.

3. Holding device according to Claim 1, **characterized in that** the bushing (1) is designed as a single-piece injection-moulded plastic part.

4. Holding device according to at least one of the preceding claims, **characterized in that** provided between the pair of material tabs (5 or 6) integrally formed on the bushing ends is a guide device having a guide groove (8) closed at both ends on the one material tab (5) and a projection (9) engaging therein on the other material tab (6).

5. Holding device according to at least one of the preceding claims, **characterized in that** the bushing (1) has tangential integrally formed material portions (10) which connect the material tabs (5, 6) on the left of the separating gap (4) and the material tabs (5, 6) on the right of the separating gap (4) to one another to form a U-shape.

6. Holding device according to at least one of the preceding claims, **characterized in that** the material tabs (5, 6) have installation holes (11) in alignment with one another for receiving fastening bolts (12), which extend parallel to the bushing axis, for the gripping element (2).

7. Holding device according to at least one of the preceding claims, **characterized in that** the gripping element (2) comprises a hand loop.

## Revendications

1. Dispositif de maintien pour véhicules de grand volume, par exemple des autobus, avec une douille (1) qui entoure concentriquement une tringle de maintien (3) et un corps de poignée (2) disposé sur la douille, **caractérisé en ce que** la douille (1) est configurée de manière à pouvoir être évasée élastiquement par un joint de séparation (4) axial continu, **en ce que** sur chacune des . extrémités de la douille (1) deux pattes de matière (5, 6) voisines sont disposées en saillie radiale l'une à gauche et l'autre à droite du joint de séparation (4), **en ce que** les pattes de matière (5, 6) sont écartées l'une de l'autre lorsque la douille (1) est évasée et se superposent l'une à l'autre lorsque le joint de séparation (4) est largement fermé et **en ce que** le corps de poignée (2) est disposé sur les pattes de matière (4, 5) de telle sorte qu'un rétrécissement du joint de séparation (4) et donc un serrage de la douille (1) sur la tringle de maintien (3) ont lieu lorsqu'une force de traction est exercée sur le corps de poignée.

2. Dispositif de maintien selon la revendication 1, **caractérisé en ce que** des nervures (14), des cames ou similaires qui s'appuient sur la tringle de maintien (3) et qui sont constituées d'un matériau qui présente des propriétés de freinage du glissement et qui est moins dur que le reste du corps de la douille sont disposées à l'intérieur de la douille (1).

3. Dispositif de maintien selon la revendication 1, **caractérisé en ce que** la douille (1) est configurée sous la forme d'une pièce d'un seul tenant en matière synthétique moulée par injection.

4. Dispositif de maintien selon au moins l'une des revendications précédentes, **caractérisé en ce qu'**un dispositif de guidage qui présente sur l'une des pattes de matière (5) une rainure de guidage (8) fermée à ses deux extrémités et sur l'autre patte de matière (6) une came (9) qui s'engage dans la rainure de guidage est prévu entre chaque paire de pattes de matière (5 ou 6) formées aux extrémités de la douille.

5. Dispositif de maintien selon au moins l'une des revendications précédentes, **caractérisé en ce que** la douille (1) présente des reliefs de matière tangentiels (10) qui relient l'une à l'autre et chaque fois en forme de U les pattes de matière (5, 6) situées à gauche du joint de séparation (4) et les pattes de matière (5, 6) située à droite du joint de séparation (4).

6. Dispositif de maintien selon au moins l'une des revendications précédentes, **caractérisé en ce que** les pattes de matière (5, 6) présentent des trous de montage (11) qui sont alignés l'un sur l'autre et qui s'étendent parallèlement à l'axe de la douille, pour la réception de boulons (12) de fixation du corps de poignée (2).

7. Dispositif de montage selon au moins l'une des revendications précédentes, **caractérisé en ce que** le corps de poignée (2) est constitué d'un anneau.
